# EUROPEAN PATENT SPECIFICATION

(11) **EP 3 518 578 B1**
(45) Date of publication and mention of the grant of the patent: **04.03.2020**
(21) Application number: 18153745.7
(22) Date of filing: 26.01.2018
(51) Int. Cl.: H04W 28/08, H04W 84/12, H04W 28/02

(54) **DATA MANAGER FOR DISTRIBUTING DATA OF A DATA STREAM OF A USER EQUIPMENT VIA MULTIPLE WIRELESS LOCAL AREA NETWORK LINKS**
DATENMANAGER ZUM VERTEILEN VON DATEN EINES DATENSTROMS VON BENUTZERGERÄTEN ÜBER MEHRERE DRAHTLOSE LOKALE NETZWERKVERBINDUNGEN
GESTIONNAIRE DE DONNÉES PERMETTANT DE DISTRIBUER DES DONNÉES D'UN FLUX DE DONNÉES D'UN ÉQUIPEMENT UTILISATEUR PAR L'INTERMÉDIAIRE DE MULTIPLES LIAISONS DE RÉSEAU LOCAL SANS FIL

(43) Date of publication of application: 31.07.2019
(73) Proprietor: Deutsche Telekom AG, 53113 Bonn (DE)
(72) Inventor: KADEL, Gerhard, 64293 Darmstadt (DE); AMEND, Markus, 63667 Nidda (DE)
(74) Representative: Braun-Dullaeus Pannen Emmerling Patent- & Rechtsanwaltspartnerschaft mbB

(56) References cited:
- US-A1- 2015 188 976
- US-A1- 2015 201 373
- BT PLC: "Multi-access converged NG Core architecture", 3GPP DRAFT; S2-163455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Vienna, Austria; 20160711 - 20160715 10 July 2016 (2016-07-10), XP051118053, Retrieved from the Internet: URL:http://www.3gpp.org/ftp/Meetings_3GPP_ SYNC/SA2/Docs/ [retrieved on 2016-07-10]

## Description

The invention relates to a data manager for distributing data of a data stream of a user equipment via a first wireless local area network link and the second wireless local area network link. The invention further relates to a communication system and a method.

Modern access gateways, for example home gateways may provide a plurality of wireless local area network interfaces that allow an operation of a user equipment using two or more wireless local area network links. The access gateway therefore may comprise a plurality of wireless local area network interfaces (e.g. Wi-Fi, Bluetooth, 5G New Radio (NR)).

A user equipment communicates with the access gateway via such a wireless local area network link and has access to a communication network via the access gateway and a network access entity connected to the access gateway. A data stream of the user equipment may be transmitted from the communication network via the access gateway and the wireless local area network links.

The wireless local area network links may not work completely failure-free so that a transmission between the communication network and the user equipment may be disturbed.

Document US 2015/0201373 A1 describes a data transmission method including generating a concurrency policy, where the concurrency policy is used to indicate a user equipment to select at least one access network from at least two access networks to transmit at least one data stream; and sending the concurrency policy to the user equipment through a first data connection between a first access network in the at least two access networks and the user equipment.

Document US 2015/0188976 A1 describes identifying and transitioning to an improved voice over internet protocol session. Qualities of each of first and second sessions for voice over internet protocol communication between endpoints are assessed and compared.

It is an objective of the invention to provide an advantageous concept for distributing data of a data stream of a user equipment.

This objective is achieved by the features of the independent claims. Further embodiments are described in the dependent claims, in the description as well as in the figures.

The invention is based on the finding that a data stream of a user equipment may be controlled by a data manager in an advantageous way by comparing link qualities of wireless local area network links and a communication link.

According to a first aspect of the invention, the objective is solved by a data manager for distributing data of a data stream of a user equipment via a first wireless local area network link and a second wireless local area network link. The user equipment is configured to simultaneously communicate over the first wireless local area network link and the second wireless local area network link. The first wireless local area network link and the second wireless local area network link each connect the user equipment to an access gateway. The access gateway is configured to connect to a network access entity via a communication link. The network access entity provides access to a communication network for the access gateway. The first wireless local area network link and the communication link form a first composite communication link. The second wireless local area network link and the communication link form a second composite communication link. The data manager comprises a network interface configured to receive a first status signal indicating a link quality of the first composite communication link, a second status signal indicating a link quality of the second composite communication link and a third status signal indicating a link quality of the communication link. The data manager comprises a processor configured to determine a reduction of an amount of data of the data stream communicated over the first wireless local area network link and to determine an increase of an amount of data of the data stream communicated over the second wireless local area network link, if the third status signal indicates a higher link quality than a link quality that is indicated by the first status signal.

The data manager distributes data of a data stream towards or from a user equipment via a first communication link and via a second communication link. The data manager distributes data of a downlink data stream and/or of an uplink data stream. The data manager may be allocated in a virtual computer system or a physical computer system. The data manager may be allocated in an LTE, a 5G a fixed or a converged communication network. For example, the data manager may be allocated in an access and mobility management function (AMF), in a session management function (SMF), an application function (AF) or other functional blocks within a 5G network architecture. The data manager may alternatively be allocated in a mobility management entity (MME), a serving gateway (SGW) or a packet data network gateway (PGW) of a LTE network architecture. The data manager may comprise support for access traffic steering, switching and splitting (ATSSS). This may show benefits in access networks from 3GPP and non-3GPP networks.

The data manager may be virtualized and distributed over a plurality of servers running functional network nodes using a functional split. The data manager may be allocated centrally or peripheral, in particular in an edge cloud of the communication network. Such a virtual system has resource benefits compared to a common communication network. For example, a functional split of network entities is possible.

The data manager may be split in other functional entities of Layer 2, Layer 2.5, Layer 3 or above Layer 3 of LTE or 5G or any other communication networks. The data manager may also be part of a hybrid-access aggregation point, HAAP, which controls access bundling in DSL or LTE or 5G, or a combination thereof. Such a hybrid access may be used to connect the access gateway to the network access entity.

The data manager may be an access resource manager. The data manager may apply different policies for managing the wireless access network resources. For example, in case that two or more Wi-Fi interfaces are used, the Wi-Fi interfaces operating in the 5 GHz bands may be prioritized over the Wi-Fi interfaces operating in 2.4 GHz bands. If the 5 GHz link may have some deteriorations (e.g. because of coverage limitations), then in addition the 2.4 GHz link may be used. In another case that one interface is Bluetooth and another one is Wi-Fi, Bluetooth may be prioritized over Wi-Fi because of lower battery consumption in the user equipment. In case that one interface is a cellular interface (e.g. LTE or 5G New Radio) and another one is Wi-Fi, a service-differentiated usage of the interfaces may be accomplished by the data manager, e.g. using the cellular interface for voice communication.

The data manager comprises a network interface. The network interface may be a logical network interface. The data manager further comprises a processor. The processor may be a virtual processor or a CPU or a microcontroller within a computer system. For example, the data manager is allocated within a server and the processor comprises the CPU of the server.

The user equipment may be a smartphone, a tablet computer or a notebook. The user equipment may be configured to communicate over the first wireless local area network link and the second wireless local area network link simultaneously. The user equipment may be further configured to communicate over additional wireless local area network links simultaneously to the first wireless local area network link and the second wireless local area network link.

The access gateway may be a router of a home network, in particular a home gateway. The communication link may be a fixed line communication link, in particular DSL, or a radio communication link, in particular a Radio Access Network (RAN) or Fixed Wireless Access (FWA) link. The access gateway may be configured to provide the first wireless local area network link and the second wireless local area network link.

From the user equipment point of view, there are at least two possible communication links into the communication network. On the one hand, there is the first wireless local area network link and the communication link and on the other hand, the user equipment may communicate with the communication network via the second wireless local area network link and the communication link.

The user equipment may also be connected to the access gateway by more wireless local area network links than the first wireless local area network link and the second wireless local area network link. In this case, the user equipment may have more communication links into the communication network, each communication link comprising a wireless local area network link and the communication link.

Determining an increase and a decrease of an amount of data, in particular an increase and a decrease of an amount of data in a time interval, may comprise providing distribution parameters specifying the amount of data that is to be reduced and the amount of data that is to be increased over the first wireless local area network link or the second wireless local area network link, respectively. Therefore, the data manager provides an advantageous possibility to increase the link quality of the user equipment without determining the link quality of the first wireless local area network link and the second wireless local area network link directly.

In an embodiment, the processor is configured to determine a reduction of a data rate or a reduced data rate on the first wireless local area network link for reducing the data amount communicated over the first wireless local area network link, and to determine an increase of a data rate or an increased data rate on the second wireless local area network link, in particular a corresponding increased data rate, for increasing the data amount communicated over the second wireless local area network link.

A data rate is a possibility for the data manager to control the data stream of the user equipment. Choosing corresponding data rates, i.e. the data rate is reduced by the same amount as the respective data rate utilizes the possible data rate on the first and second wireless local area network links.

In an embodiment, the processor is configured to determine a first amount of data of the data stream communicated over the first wireless local area network link and a second amount of data of the data stream communicated over the second wireless local area network link, the first amount of data being smaller than the second amount of data, in order to determine the reduction of amount of data on the first wireless local area network link and the increase of amount of data on the second wireless local area network link.

A distribution of the amount of data may increase the data stream via the wireless local area network links of the UE by distributing a predetermined amount of data onto two different amounts of data.

In an embodiment, the processor is configured to determine the reduction of the data communicated over the first wireless local area network link and the increase of the data communicated over the second wireless local area network link if a comparison of the link quality of the first wireless local area network link and the quality of the communication link indicates a disturbance of the first wireless local area network link.

The data manager and other entities of the communication network are in general not able to directly determine a quality of a wireless local area network link that is established within the home network, in particular the first wireless local area network link and the second wireless local area network link. The first data signal indicating the link quality of the first composite communication link, the second status signal indicating the quality of the second composite communication link and the third status signal indicating the link quality of the communication link allow the data manager to determine indirectly the link quality of the first wireless local area network link and the second wireless local area network link.

The link quality of the first wireless local area network link and/or the second wireless local area network link may deteriorate. If the deterioration is bigger than a predetermined value in a predetermined time, the processor may determine that the link quality of the first wireless local area network link and/or the second wireless local area network link, respectively, is not good enough for a failure-free transmission.

In an embodiment, the processor is configured to assess that the first wireless local area network link is disturbed if the link quality of the communication link is higher than the first wireless local area network link quality and wherein the processor is configured to assess that the second wireless local area network link is disturbed if the link quality of the communication link is higher than the second wireless local area network link quality.

After indirectly determining the link quality of the first and the second wireless local area network link the data manager may compare the link quality to determine a distribution of the data stream.

In an embodiment, the respective link quality is determined by a link quality indicator that indicates at least one of the following link quality parameters: bit error rate, packet error rate, communication delay, signal to noise ratio, communication bandwidth. These parameters influence a transmission and may be detected directly or indirectly.

In an embodiment, the processor is configured to determine the reduction of the amount of data and the increase of the amount of data upon a basis of a look-up table, the look-up table assigning reduction of amounts of data and increase of amounts of data to link qualities.

A look-up table may decrease the processing time that is needed to determine the reduction and/or the increase of the amount of data, respectively.

In an embodiment, the processor is configured to output a data control signal indicating the reduction of the amount of data and the increase of the amount of data, wherein the network interface is configured to transmit the first data control signal towards the access gateway.

Providing control signals to control the data stream towards the user equipment allows the data manager to directly influence the data stream of the user equipment and to remotely control the access gateway to control the first wireless local area network link and/or the second wireless local area network link. Providing a control signal indicating the reduction of the amount of data and the increase in the amount of data allows to remotely control the access gateway to distribute the data stream of the user equipment respectively.

In an embodiment, the network interface is communicatively connected to the access gateway for receiving the status signals.

According to a second aspect of the invention, the objective is solved by a communication system. The communication system comprises a first network access entity for providing a network access via a communication link to an access gateway, an access gateway configured to connect to the communication network via the communication link and a user equipment configured to connect to the access gateway via a first wireless local area network link and a second wireless local area network link. The first wireless local area network link and the communication link form a first composite communication link. The second wireless local area network link and the communication link form a second composite communication link. The user equipment is configured to simultaneously communicate over the first wireless local area network link and the second wireless local area network link. The communication system comprises a data manager comprising a network interface configured to receive a first status signal indicating a link quality of the first composite communication link, a second status signal indicating a link quality of the second composite communication link and a third status signal indicating a link quality of the communication link. The data manager comprises a processor configured to determine a reduction of an amount of data of the data stream communicated over the first wireless local area network link and to determine an increase of an amount of data of the data stream communicated over the second wireless local area network link, if the third status signal indicates a higher link quality than a link quality that is indicated by the first status signal.

The communication system may provide a constantly high link quality for the user equipment.

In an embodiment, the processor of the data manager is configured to output a data control signal indicating the reduction of the amount of data and the increase of the amount of data, wherein the network interface is configured to transmit the first data control signal towards the access gateway.

The processor generates a control signal to indicate the distribution of the data stream of the user equipment. The control signal may be handed over to the access gateway so that the access gateway may control the first and second wireless local area network link.

In an embodiment, the access gateway is configured to adapt the first wireless local area network link and the second wireless local area network link based on the control signal or wherein the access gateway is configured to be controlled by the control signal to adapt the first wireless local area network link and the second wireless local area network link.

Controlling the access gateway remotely by the data manager grants control over the distribution in the home network to the data manager in the communication network.

In an embodiment, the data manager is allocated in a functional entity of the communication network or wherein the data manager is allocated in the communication network using a functional split of the data manager functionality or wherein the data manager is allocated in the access gateway. A functional entity of a 5G network, for example, comprises an access and management mobility function, AMF, a session management function, SMF, an application function, AF and others. Functional entities in an LTE network may, for example, comprise a mobility management entity, MME, a serving gateway, SGW, a PDN gateway, PGW and others. In the access gateway, the data manager may receive the first and/or second status signal from the data network, in particular an entity in the data network.

In an embodiment, the functional split of the data manager distributes the data manager at least partially to an edge of the communication system.

Splitting, i.e. distributing the functionality of the data manager over the plurality of functional entities and the communication network, saves resources of the communication network.

According to a third aspect of the invention, the objective is solved by a method for distributing data of a data stream of a user equipment via a first wireless local area network link and a second wireless local area network link. The user equipment is configured to simultaneously communicate over the first wireless local area network link and the second wireless local area network link. The first wireless local area network link and the second wireless local area network link each connect the user equipment to an access gateway. The access gateway is configured to connect to a network access entity via a communication link. The network access entity providing access to a communication network for the access gateway. The first wireless local area network link and the communication link form a first composite communication link. The second wireless local area network link and the communication link form a second composite communication link. The method comprises:
receiving a first status signal indicating a link quality of the first composite communication link;
receiving a second status signal indicating a link quality of the second composite communication link;
receiving a third status signal indicating a link quality of the communication link;
determining a reduction of an amount of data of the data stream communicated over the first wireless local area network link and an increase of an amount of data of the data stream communicated over the second wireless local area network link, if the third status signal indicates a higher link quality than a link quality that is indicated by the first status signal.

The receiving may be performed by the network interface of the data manager. The determining may be performed by the processor of the data manager. The method may be performed automatically by the data manager.

The invention concept is now described by way of example with reference to the accompanying drawings, in which:
- Fig. 1: shows a schematic diagram of a data manager according to an embodiment of the invention;
- Fig. 2: shows a schematic diagram of an arrangement according to the described embodiment of the invention; and
- Fig. 3: shows a schematic flowchart diagram of a method according to an embodiment of the invention.

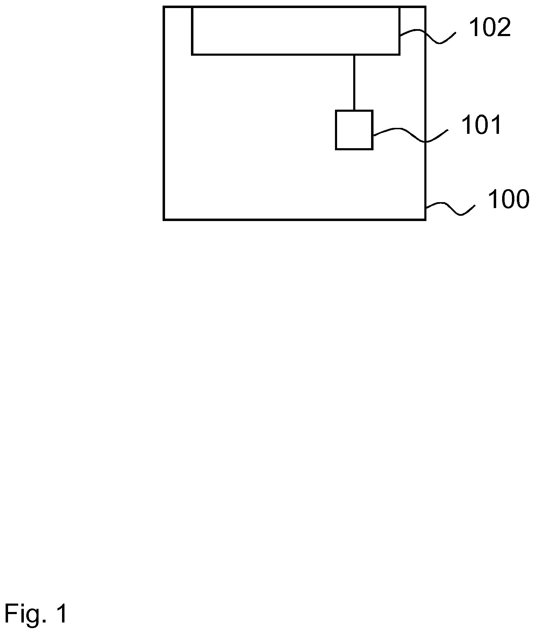

Fig. 1 shows a schematic diagram of a data manager 100. In the described embodiment, the data manager 100 is an access resource manager. The data manager 100 comprises a processor 101. The processor 101 is in the described embodiment the CPU of a server entity within the communication network. In another embodiment, the processor 101 is a virtual processor of a network entity or a plurality of network entities or a microcontroller.

The data manager 100 comprises a network interface 102. The network interface 102 is a logical interface. In another embodiment, wherein the data manager 100 is a physical entity, the network interface 102 is a physical interface for receiving or transmitting fixed-line or radio signals.

The data manager 100 is allocated in a core access and mobility management function, AMF, of a 5G network architecture. In another embodiment, the data manager 100 is allocated in a session management control function, SMF, of a 5G network or another network entity of a 5G network or of an LTE network, in particular a mobility management entity, MME. In yet another embodiment, the data manager 100 is distributed on a functional layer over a plurality of functional network entities, in particular in an edge cloud of the communication network.

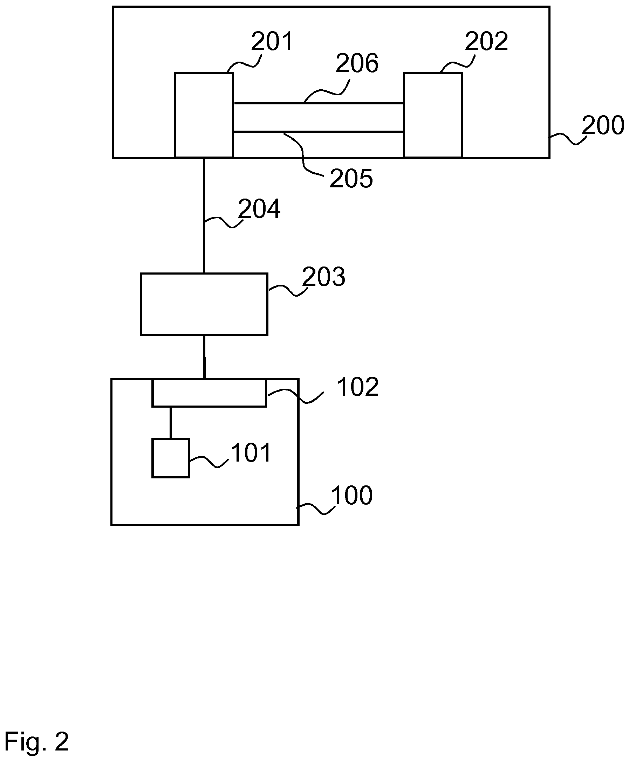

Fig. 2 shows a schematic diagram of an arrangement with the data manager 100 according to an embodiment of the invention. The arrangement comprises a home network 200. The home network 200 comprises an access gateway 201, in particular a home gateway. The access gateway 201 is a router for providing a network access to the communication network for private users or business users.

The home network 200 comprises a user equipment 202. The user equipment 202 is a mobile phone, used in the home network 200. In other embodiments, the user equipment 202 is another computer system, in particular a tablet computer, a desktop computer or a smart watch.

The arrangement further comprises a network access entity 203. In the described embodiment, the network access entity 203 is an access entity for a fixed line network and provides access to a DSL network. In another embodiment, the network access entity 203 is a radio access network entity and provides access to a radio access network, RAN. For example, the network access entity 203 is an eNodeB for an LTE network or gNodeB for a 5G network.

The data manager 100 is functionally connected to the first network access entity 203. The access gateway 201 is connected to the network access entity 203 via a communication link 204. In the described embodiment, the communication link 204 is a fixed line network link, in particular DSL. In another embodiment, wherein the network access entity 203 provides a RAN link for the access gateway 201, the communication link 204 is a radio communication link, in particular a LTE or a 5G network link.

The access gateway 201 is configured to provide a first wireless local area network link 205 and a second wireless local area network link 206. The access gateway 201 is configured to control the distribution of data of the user equipment via the first wireless local area network link 205 and the second wireless local area network link 206 based on a control signal indicating a distribution ratio.

The user equipment 202 has access to the communication network via the first wireless local area network link 205 and the communication link 204, therefore, the first wireless local area network link 205 and the communication link 204 forming a first composite communication link. The user equipment 202 has also access to the communication network via the second wireless local area network link 206 and the communication link 204, therefore, the second wireless local area network link 206 and the communication link 204 forming a second composite communication link.

The data manager 100 is configured to receive status signals. In particular, the network interface 102 of the data manager 100 is configured to receive status signals and the processor 101 is configured to process status signals. The network access entity 203 is configured to forward status signals that are transmitted from the user equipment 202 towards the data manager 100, i.e. towards the communication network.

The user equipment 202 is configured to transmit a first status signal via the first composite communication link towards the data manager 100. The first status signal indicates the link quality of a combination of the first wireless local area network link 205 and the communication link 204. The user equipment 202 is also configured to transmit a second status signal towards the communication network, in particular towards the data manager 100, via the second composite communication link. The second status signal indicates the link quality of the second composite communication link. The second status signal indicates the link quality of a combination of the second wireless local area network link 206 and the communication link 204.

The access gateway is configured to transmit a third status signal via the communication link 204 towards the data manager 100. The third status signal indicates the link quality of the communication link 204.

The data manager 100 is configured to compare the first status signal, the second status signal and the third status signal, in particular to compare the first status signal with the third status signal and to compare the second status signal with the third status signal and to compare the results of these two comparisons. The data manager 100 can therefore determine the link quality of the first wireless local area network link 205 and the second wireless local area network link 206 indirectly.

The data manager 100 is configured to determine a split of the data stream of the user equipment 202, in particular towards the user equipment 202 or from the user equipment 202. For determining the split of the data stream of the user equipment 202, the results of the comparisons of the status signals indicating above-mentioned link qualities are used.

The amount of data transmitted over the first wireless local area network link 205 is determined to be increased, if the comparison of the first status signal and the third status signal indicates that the link quality of the first wireless local area network link 205 is lower than the link quality of the communication link 204. The amount of data transmitted over the second wireless local area network link 205 is determined to be increased, if the comparison of the second status signal and the third status signal indicates that the link quality of the second wireless local area network link 205 is lower than the link quality of the communication link 204.

The amount of data transmitted via the first wireless local area network link 205 is also determined to be increased, if the first status signal indicates a higher link quality than the link quality indicated by the second status signal. Furthermore, the amount of data transmitted via the second wireless local area network link 205 is also determined to be increased, if the second status signal indicates a higher link quality than the link quality indicated by the first status signal.

The data manager 100 generates a control signal that comprises a distribution ratio based on the previous determined amounts of data transmitted over the first wireless local area network link 205 or the second wireless local area network link 206. The control signal is transmitted towards the access gateway 201 by the network interface 102 of the data manager 100.

The access gateway 201 controls the distribution of data of the user equipment 202 based on this control signal of the data manager 100. Therefore, the access gateway 201 can be remotely controlled by the data manage 100, at least with respect to the distribution of data towards and/or from the user equipment 202 via the first wireless local area network link 205 and the second wireless local area network link 206.

In another embodiment that is not depicted, the data manager 100 is allocated in the access gateway 201. The data manager 100 is in communication with the access entity 203 and/or the data network, in particular a managing data network entity in the data network, to receive data transmission information, i.e. the first status signal and the second status signal, relating to the first composite communication link and the second composite communication link. The data manager 100 is further configured to receive the third status signal from the access entity 203 or an entity allocated in the data network. Determining the reduction of the amount of data of the data stream communicated over the first wireless local area network link (204) and determining the increase of the amount of data of the data stream communicated over the second wireless local area network link is performed in the above described way.

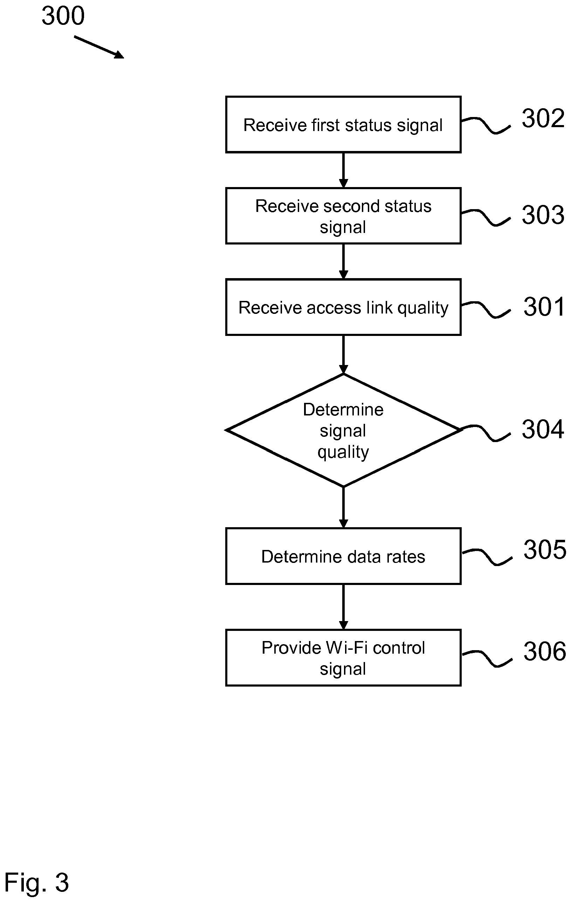

Fig. 3 shows a schematic flowchart diagram 300 of a method according to an embodiment of the invention. In step 301, the data manager 100 receives a first status signal. The first status signal is received by the network interface 102. The received first status signal was transmitted by the user equipment 202 of the home network 200 towards the communication network and is received by the network interface 102 of the data manager 100. The first status signal indicates the quality of the first composite communication link, i.e. the link quality of the combination of the first wireless local area network link 205 and the communication link 204.

In step 302, a second status signal is received by the network interface 102 of the data manager 100. The second status signal indicates the link quality of the second composite communication link and was also transmitted by the user equipment 202. The second status signal indicates the link quality of the combination of the second wireless local area network link 206 and the communication link 204.

In step 303, the network interface 102 of the data manager 100 receives a third status signal that indicates the link quality of the communication link 204. The third status signal was transmitted by the access gateway 201.

In another embodiment, the first status signal, the second status signal and the third status signal are received in another order.

The received first status signal, the received second status signal and the received third status signal are processed by the data manager 100 in step 304. In particular, the data manager 100 compares the link quality of the first composite communication link with the link quality of the communication link and further compares the link quality of the second communication link with the link quality of the communication link by validating the three different status signals. The result of these comparisons indicates the link qualities of the first wireless local area network link 205 and the second wireless local area network link 206.

In step 305, the data manager 200 determines the distribution of the data stream of the user equipment 303 based on the link quality of the first wireless local area network link 205 and the second wireless local area network link 206.

If the comparison in step 304 indicates that the link quality of the first wireless local area network link 205 is at least equal to the link quality of the communication link and the link quality of the second wireless local area network link 206 is also at least equal to the link quality of the communication link, the data manager 100 determines the data distribution to equivalent values for both the first wireless local area network link 205 and the second wireless local area network link 206. In another embodiment no distribution of the data stream is determined, if it is determined the neither the first wireless local area network link 205 nor the second wireless local area network link 206 has a reduced link quality.

If the comparison of step 304 indicates that the link quality indicated by the first status signal is better than the link quality indicated by the second status signal, the data manager 100 determines in step 305 the distribution of the data stream of the user equipment 202 by increasing the amount of data streamed over the first wireless local area network link 205 and decreasing the amount of data of the data stream communicated over the second wireless local area network link 206.

If the comparison of step 304 indicates that the link quality indicated by the second status signal is better than the link quality indicated by the first status signal, the data manager 100 determines in step 305 the distribution of the data stream of the user equipment 202 by increasing the amount of data streamed over the second wireless local area network link 206 and decreasing the amount of data of the data stream communicated over the first wireless local area network link 205.

In step 306, the processor 101 of the data manager 100 generates a control signal to instruct the access gateway 201 to distribute the data stream of the user equipment 202 according to the determined data rates.

### List of reference signs

- 100: data manager
- 101: processor
- 102: network interface
- 200: home network
- 201: access gateway
- 202: user equipment
- 203: network access entity
- 204: communication link
- 205: first wireless local area network link
- 206: second wireless local area network link
- 300: flowchart diagram
- 301 to 306: step

## Claims

1. A data manager (100) for distributing data of a data stream of a user equipment (202) via a first wireless local area network link (205) and a second wireless local area network link (206), the user equipment (202) being configured to simultaneously communicate over the first wireless local area network link (205) and the second wireless local area network link (206),
the first wireless local area network link (205) and the second wireless local area network link (206) each connecting the user equipment (202) to an access gateway (201), wherein the access gateway (201) is configured to connect to a network access entity (203) via a communication link (204), the network access entity (203) providing access to a communication network for the access gateway (201),
the first wireless local area network link (205) and the communication link (204) forming a first composite communication link, and the second wireless local area network link (206) and the communication link (204) forming a second composite communication link,
the data manager (100) comprising:
a network interface (102) being configured to receive
a first status signal indicating a link quality of the first composite communication link (204),
a second status signal indicating a link quality of the second composite communication link (204) and
a third status signal indicating a link quality of the communication link (204); and
a processor (101) being configured
to determine a reduction of an amount of data of the data stream communicated over the first wireless local area network link (205) and
to determine an increase of an amount of data of the data stream communicated over the second wireless local area network link (206), if the third status signal indicates a higher link quality than a link quality that is indicated by the first status signal.

2. The data manager (100) of claim 1, wherein the processor (101) is configured
to determine a reduction of a data rate or a reduced data rate on the first wireless local area network link (205) for reducing the data amount communicated over the first wireless local area network link, and
to determine an increase of a data rate or an increased data rate on the second wireless local area network link (206), in particular a corresponding increased data rate, for increasing the data amount communicated over the second wireless local area network link (206).

3. The data manager (100) of anyone of the preceding claims, wherein the processor (101) is configured to determine a first amount of data of the data stream communicated over the first wireless local area network link (205) and a second amount of data of the data stream communicated over the second wireless local area network link (206), the first amount of data being smaller than the second amount of data, in order to determine the reduction of amount of data on the first wireless local area network link (205) and the increase of amount of data on the second wireless local area network link (206).

4. The data manager (100) of anyone of the preceding claims, wherein the processor (101) is configured to determine the reduction of the data communicated over the first wireless local area network link (205) and the increase of the data communicated over the second wireless local area network link (206) if a comparison of the link quality of the first wireless local area network link (205) and the quality of the communication link (204) indicates a disturbance of the first wireless local area network link.

5. The data manager (100) of claim 4, wherein the processor (101) is configured to assess that the first wireless local area network link (205) is disturbed if the link quality of the communication link (204) is higher than the first wireless local area network link (205) quality and wherein the processor (101) is configured to assess that the second wireless local area network link (206) is disturbed if the link quality of the communication link (204) is higher than the second wireless local area network link (206) quality.

6. The data manager (100) of any of the preceding claims, wherein the respective link quality is determined by a link quality indicator that indicates at least one of the following link quality parameters: bit error rate, packet error rate, communication delay, signal to noise ratio, communication bandwidth.

7. The data manager (100) of any of the preceding claims, wherein the processor (101) is configured to determine the reduction of the amount of data and the increase of the amount of data upon a basis of a look-up table, the look-up table assigning reduction of amounts of data and increase of amounts of data to link qualities.

8. The data manager (100) of any of the preceding claims, wherein the processor (101) is configured to output a data control signal indicating the reduction of the amount of data and the increase of the amount of data, wherein the network interface (102) is configured to transmit the first data control signal towards the access gateway (201).

9. The data manager (100) of any of the preceding claims, wherein the network interface (102) is communicatively connected to the access gateway (201) for receiving the status signals.

10. A communication system, comprising:
a first network access entity (203) for providing a network access via a communication link (204) to an access gateway (201),
an access gateway (201) being configured to connect to the communication network via the communication link (204); and
a user equipment (202) being configured to connect to the access gateway (201) via a first wireless local area network link (205) and a second wireless local area network link (206),
the first wireless local area network link (205) and the communication link (204) forming a first composite communication link (204), the second wireless local area network link (206) and the communication link (204) forming a second composite communication link (204);
the user equipment (202) being configured to simultaneously communicate over the first wireless local area network link (205) and the second wireless local area network link (206); and
a data manager (100) comprising:
a network interface (102) being configured to receive
a first status signal indicating a link quality of the first composite communication link (204),
a second status signal indicating a link quality of the second composite communication link (204) and
a third status signal indicating a link quality of the communication link (204); and
a processor (101) being configured
to determine a reduction of an amount of data of the data stream communicated over the first wireless local area network link (205) and
to determine an increase of an amount of data of the data stream communicated over the second wireless local area network link (206), if the third status signal indicates a higher link quality than a link quality that is indicated by the first status signal.

11. The communication system of claim 10, wherein the processor (101) of the data manager (100) is configured to output a data control signal indicating the reduction of the amount of data and the increase of the amount of data, wherein the network interface (102) is configured to transmit the first data control signal towards access gateway (201).

12. The communication system of claim 11, wherein the access gateway (201) is configured to adapt the first wireless local area network link (205) and the second wireless local area network link (206) based on the control signal or wherein the access gateway (201) is configured to be controlled by the control signal to adapt the first wireless local area network link (205) and the second wireless local area network link (206).

13. The communication system of one of claims 10 to 12, wherein the data manager (100) is allocated in a functional entity of the communication network or wherein the data manager (100) is allocated in the communication network using a functional split of the data manager (100) functionality or wherein the data manager (100) is allocated in the access gateway (201).

14. The communication system of claim 13, wherein the functional split of the data manager (100) distributes the data manager (100) at least partially to an edge of the communication system.

15. A method for distributing data of a data stream of a user equipment (202) via a first wireless local area network link (205) and a second wireless local area network link (206), the user equipment (202) being configured to simultaneously communicate over the first wireless local area network link (205) and the second wireless local area network link (206),
the first wireless local area network link (205) and the second wireless local area network link (206) each connecting the user equipment (202) to an access gateway (201), wherein the access gateway (201) is configured to connect to a network access entity (203) via a communication link (204), the network access entity (203) providing access to a communication network for the access gateway (201),
the first wireless local area network link (205) and the communication link (204) forming a first composite communication link (204), and the second wireless local area network link (206) and the communication link (204) forming a second composite communication link (204), the method comprising:
receiving a first status signal indicating a link quality of the first composite communication link (204),
receiving a second status signal indicating a link quality of the second composite communication link (204);
receiving a third status signal indicating a link quality of the communication link (204);
determining a reduction of an amount of data of the data stream communicated over the first wireless local area network link (205) and an increase of an amount of data of the data stream communicated over the second wireless local area network link (206), if the third status signal indicates a higher link quality than a link quality that is indicated by the first status signal.

## Patentansprüche

1. Datenmanager (100) zum Verteilen von Daten eines Datenstroms einer Teilnehmereinrichtung (202) über eine erste drahtlose lokale Netzwerkverbindung (205) und eine zweite drahtlose lokale Netzwerkverbindung (206), wobei die Teilnehmereinrichtung (202) dazu ausgelegt ist, gleichzeitig über die erste drahtlose lokale Netzwerkverbindung (205) und die zweite drahtlose lokale Netzwerkverbindung (206) zu kommunizieren,
wobei die erste drahtlose lokale Netzwerkverbindung (205) und die zweite drahtlose lokale Netzwerkverbindung (206) jeweils die Teilnehmereinrichtung (202) mit einem Access-Gateway (201) verbinden, wobei das Access-Gateway (201) dazu ausgelegt ist, sich über eine Kommunikationsverbindung (204) mit einer Netzwerkzugangsinstanz (203) zu verbinden, wobei die Netzwerkzugangsinstanz (203) Zugang zu einem Kommunikationsnetzwerk des Access-Gateways (201) bereitstellt,
wobei die erste drahtlose lokale Netzwerkverbindung (205) und die Kommunikationsverbindung (204) eine erste zusammengesetzte Kommunikationsverbindung bilden und die zweite drahtlose lokale Netzwerkverbindung (206) und die Kommunikationsverbindung (204) eine zweite zusammengesetzte Kommunikationsverbindung bilden,
wobei der Datenmanager (100) umfasst:
eine Netzwerkschnittstelle (102), die zum Empfangen von Folgendem ausgelegt ist
einem ersten Statussignal, das eine Verbindungsqualität der ersten zusammengesetzten Kommunikationsverbindung (204) angibt,
einem zweiten Statussignal, das eine Verbindungsqualität der zweiten zusammengesetzten Kommunikationsverbindung (204) angibt und
einem dritten Statussignal, das eine Verbindungsqualität der Kommunikationsverbindung (204) angibt; und
wobei ein Prozessor (101) zu Folgendem ausgelegt ist
Bestimmen eines Rückgangs einer Menge von Daten des Datenstroms, die über die erste drahtlose lokale Netzwerkverbindung (205) kommuniziert werden, und
Bestimmen eines Anstiegs einer Menge von Daten des Datenstroms, die über die zweite drahtlose lokale Netzwerkverbindung (206) kommuniziert werden, wenn das dritte Statussignal eine höhere Verbindungsqualität als eine Verbindungsqualität angibt, die durch das erste Statussignal angegeben ist.

2. Datenmanager (100) nach Anspruch 1, wobei der Prozessor (101) zu Folgendem ausgelegt ist
Bestimmen eines Rückgangs einer Datenrate oder einer verringerten Datenrate auf der ersten drahtlosen lokalen Netzwerkverbindung (205) zum Verringern der Menge von Daten, die über die erste drahtlose lokale Netzwerkverbindung kommuniziert werden, und
Bestimmen eines Anstiegs einer Datenrate oder einer erhöhten Datenrate auf der zweiten drahtlosen lokalen Netzwerkverbindung (206), insbesondere einer entsprechenden erhöhten Datenrate, zum Erhöhen der Menge von Daten, die über die erste drahtlose lokale Netzwerkverbindung (206) kommuniziert werden.

3. Datenmanager (100) nach einem der vorhergehenden Ansprüche, wobei der Prozessor (101) zum Bestimmen einer ersten Menge von Daten des Datenstroms, die über die erste drahtlose lokale Netzwerkverbindung (205) kommuniziert werden, und einer zweiten Menge von Daten des Datenstroms, die über die zweite drahtlose lokale Netzwerkverbindung (206) kommuniziert werden, ausgelegt ist, wobei die erste Menge von Daten kleiner als die zweite Menge von Daten ist, um den Rückgang der Menge von Daten auf der ersten drahtlosen lokalen Netzwerkverbindung (205) und den Anstieg der Menge von Daten auf der zweiten drahtlosen lokalen Netzwerkverbindung (206) zu bestimmen.

4. Datenmanager (100) nach einem der vorhergehenden Ansprüche, wobei der Prozessor (101) zum Bestimmen des Rückgangs der über die erste drahtlose lokale Netzwerkverbindung (205) kommunizierten Daten und des Anstiegs der über die zweite drahtlose lokale Netzwerkverbindung (206) kommunizierten Daten ausgelegt ist, wenn ein Vergleich der Verbindungsqualität der ersten drahtlosen lokalen Netzwerkverbindung (205) und der Qualität der Kommunikationsverbindung (204) eine Störung der ersten drahtlosen lokalen Netzwerkverbindung angibt.

5. Datenmanager (100) nach Anspruch 4, wobei der Prozessor (101) zum Beurteilen ausgelegt ist, dass die erste drahtlose lokale Netzwerkverbindung (205) gestört ist, wenn die Verbindungsqualität der Kommunikationsverbindung (204) höher als die Qualität der ersten drahtlosen lokalen Netzwerkverbindung (205) ist, und wobei der Prozessor (101) zum Beurteilen ausgelegt ist, dass die zweite drahtlose lokale Netzwerkverbindung (206) gestört ist, wenn die Verbindungsqualität der Kommunikationsverbindung (204) höher als die Qualität der zweiten drahtlosen lokalen Netzwerkverbindung (206) ist.

6. Datenmanager (100) nach einem der vorhergehenden Ansprüche, wobei die jeweilige Verbindungsqualität durch einen Verbindungsqualitätsindikator bestimmt wird, der mindestens einen der folgenden Verbindungsqualitätsparameter angibt: Bitfehlerrate, Paketfehlerrate, Kommunikationsverzögerung, Signal-Rausch-Verhältnis, Kommunikationsbandbreite.

7. Datenmanager (100) nach einem der vorhergehenden Ansprüche, wobei der Prozessor (101) zum Bestimmen des Rückgangs der Menge von Daten und des Anstiegs der Menge von Daten auf der Grundlage einer Nachschlagetabelle ausgelegt ist, wobei die Nachschlagetabelle Verbindungsqualitäten einen Rückgang von Mengen von Daten und einen Anstieg von Mengen von Daten zuweist.

8. Datenmanager (100) nach einem der vorhergehenden Ansprüche, wobei der Prozessor (101) zum Ausgeben eines Datensteuersignals ausgelegt ist, das den Rückgang der Menge von Daten und den Anstieg der Menge von Daten angibt, wobei die Netzwerkschnittstelle (102) zum Übertragen des ersten Datensteuersignals zum Access-Gateway (201) ausgelegt ist.

9. Datenmanager (100) nach einem der vorhergehenden Ansprüche, wobei die Netzwerkschnittstelle (102) zum Empfangen der Statussignale kommunikativ mit dem Access-Gateway (201) verbunden ist.

10. Kommunikationssystem, umfassend:
eine erste Netzwerkzugangsinstanz (203) zum Bereitstellen eines Netzwerkzugangs zu einem Access-Gateway (201) über eine Kommunikationsverbindung (204), ein Access-Gateway (201), das zum Verbinden des Kommunikationsnetzwerks über die Kommunikationsverbindung (204) ausgelegt ist; und
eine Teilnehmereinrichtung (202), die zum Verbinden mit dem Access-Gateway (201) über eine erste drahtlose lokale Netzwerkverbindung (205) und eine zweite drahtlose lokale Netzwerkverbindung (206) ausgelegt ist,
wobei die erste drahtlose lokale Netzwerkverbindung (205) und die Kommunikationsverbindung (204) eine erste zusammengesetzte Kommunikationsverbindung (204) bilden, die zweite drahtlose lokale Netzwerkverbindung (206) und die Kommunikationsverbindung (204) eine zweite zusammengesetzte Kommunikationsverbindung (204) bilden,
wobei die Teilnehmereinrichtung (202) zum gleichzeitigen Kommunizieren über die erste drahtlose lokale Netzwerkverbindung (205) und die zweite drahtlose lokale Netzwerkverbindung (206) ausgelegt ist; und
einen Datenmanager (100), umfassend:
eine Netzwerkschnittstelle (102), die zum Empfangen von Folgendem ausgelegt ist
einem ersten Statussignal, das eine Verbindungsqualität der ersten zusammengesetzten Kommunikationsverbindung (204) angibt,
einem zweiten Statussignal, das eine Verbindungsqualität der zweiten zusammengesetzten Kommunikationsverbindung (204) angibt und
einem dritten Statussignal, das eine Verbindungsqualität der Kommunikationsverbindung (204) angibt; und
wobei ein Prozessor (101) zu Folgendem ausgelegt ist
Bestimmen eines Rückgangs einer Menge von Daten des Datenstroms, die über die erste drahtlose lokale Netzwerkverbindung (205) kommuniziert werden, und
Bestimmen eines Anstiegs einer Menge von Daten des Datenstroms, die über die zweite drahtlose lokale Netzwerkverbindung (206) kommuniziert werden, wenn das dritte Statussignal eine höhere Verbindungsqualität als eine Verbindungsqualität angibt, die durch das erste Statussignal angegeben ist.

11. Kommunikationssystem nach Anspruch 10, wobei der Prozessor (101) des Datenmanagers (100) zum Ausgeben eines Datensteuersignals ausgelegt ist, das den Rückgang der Menge von Daten und den Anstieg der Menge von Daten angibt, wobei die Netzwerkschnittstelle (102) zum Übertragen des ersten Datensteuersignals zum Access-Gateway (201) ausgelegt ist.

12. Kommunikationssystem nach Anspruch 11, wobei das Access-Gateway (201) zum Anpassen der ersten drahtlosen lokalen Netzwerkverbindung (205) und der zweiten drahtlosen lokalen Netzwerkverbindung (206) auf der Grundlage des Steuersignals ausgelegt ist oder wobei das Access-Gateway (201) dazu ausgelegt ist, von dem Steuersignal zum Anpassen der ersten drahtlosen lokalen Netzwerkverbindung (205) und der zweiten drahtlosen lokalen Netzwerkverbindung (206) gesteuert zu werden.

13. Kommunikationssystem nach einem der Ansprüche 10 bis 12, wobei der Datenmanager (100) in einer Funktionsinstanz des Kommunikationsnetzwerks zugewiesen ist oder wobei der Datenmanager (100) im Kommunikationsnetzwerk unter Verwendung eines funktionalen Teilens der Funktionalität des Datenmanagers (100) zugewiesen ist oder wobei der Datenmanager (100) im Access-Gateway (201) zugewiesen ist.

14. Kommunikationssystem nach Anspruch 13, wobei das funktionale Teilen des Datenmanagers (100) den Datenmanager (100) mindestens teilweise an einen Rand des Kommunikationssystems verteilt.

15. Verfahren zum Verteilen von Daten eines Datenstroms einer Teilnehmereinrichtung (202) über eine erste drahtlose lokale Netzwerkverbindung (205) und eine zweite drahtlose lokale Netzwerkverbindung (206), wobei die Teilnehmereinrichtung (202) dazu ausgelegt ist, gleichzeitig über die erste drahtlose lokale Netzwerkverbindung (205) und die zweite drahtlose lokale Netzwerkverbindung (206) zu kommunizieren,
wobei die erste drahtlose lokale Netzwerkverbindung (205) und die zweite drahtlose lokale Netzwerkverbindung (206) jeweils die Teilnehmereinrichtung (202) mit einem Access-Gateway (201) verbinden, wobei das Access-Gateway (201) dazu ausgelegt ist, sich über eine Kommunikationsverbindung (204) mit einer Netzwerkzugangsinstanz (203) zu verbinden, wobei die Netzwerkzugangsinstanz (203) Zugang zu einem Kommunikationsnetzwerk des Access-Gateways (201) bereitstellt,
wobei die erste drahtlose lokale Netzwerkverbindung (205) und die Kommunikationsverbindung (204) eine erste zusammengesetzte Kommunikationsverbindung (204) bilden und die zweite drahtlose lokale Netzwerkverbindung (206) und die Kommunikationsverbindung (204) eine zweite zusammengesetzte Kommunikationsverbindung (204) bilden, wobei das Verfahren umfasst:
Empfangen eines ersten Statussignals, das eine Verbindungsqualität der ersten zusammengesetzten Kommunikationsverbindung (204) angibt,
Empfangen eines zweiten Statussignals, das eine Verbindungsqualität der zweiten zusammengesetzten Kommunikationsverbindung (204) angibt;
Empfangen eines dritten Statussignals, das eine Verbindungsqualität der Kommunikationsverbindung (204) angibt;
Bestimmen eines Rückgangs einer Menge von Daten des Datenstroms, die über die erste drahtlose lokale Netzwerkverbindung (205) kommuniziert werden, und Bestimmen eines Anstiegs einer Menge von Daten des Datenstroms, die über die zweite drahtlose lokale Netzwerkverbindung (206) kommuniziert werden, wenn das dritte Statussignal eine höhere Verbindungsqualität als eine Verbindungsqualität angibt, die durch das erste Statussignal angegeben ist.

## Revendications

1. Gestionnaire de données (100) pour distribuer les données d'un flux de données d'un équipement utilisateur (202) via une première liaison de réseau local sans fil (205) et une deuxième liaison de réseau local sans fil (206), l'équipement utilisateur (202) étant configuré pour communiquer simultanément sur la première liaison de réseau local sans fil (205) et la deuxième liaison de réseau local sans fil (206),
la première liaison de réseau local sans fil (205) et la deuxième liaison de réseau local sans fil (206) connectant chacune l'équipement utilisateur (202) à une passerelle d'accès (201), dans lequel la passerelle d'accès (201) est configurée pour se connecter à une entité d'accès au réseau (203) via une liaison de communication (204), l'entité d'accès au réseau (203) procurant un accès à un réseau de communication pour la passerelle d'accès (201),
la première liaison de réseau local sans fil (205) et la liaison de communication (204) formant une première liaison de communication composite, et la deuxième liaison de réseau local sans fil (206) et la liaison de communication (204) formant une deuxième liaison de communication composite,
le gestionnaire de données (100) comprenant :
une interface réseau (102) configurée pour recevoir
un premier signal d'état qui indique une qualité de liaison de la première liaison de communication composite (204),
un deuxième signal d'état qui indique une qualité de liaison de la deuxième liaison de communication composite (204), et
un troisième signal d'état qui indique une qualité de liaison de la liaison de communication (204) ; et
un processeur (101) configuré
pour déterminer une réduction de la quantité de données du flux de données communiquées via la première liaison de réseau local sans fil (205) et
pour déterminer une augmentation de quantité de données du flux de données communiquées via la deuxième liaison de réseau local sans fil (206), si le troisième signal d'état indique une qualité de liaison supérieure à la qualité de liaison indiquée par le premier signal d'état.

2. Gestionnaire de données (100) selon la revendication 1, dans lequel le processeur (101) est configuré
pour déterminer une réduction de débit de données ou un débit de données réduit sur la première liaison de réseau local sans fil (205) pour réduire la quantité de données communiquées via la première liaison de réseau local sans fil, et
pour déterminer une augmentation de débit de données ou un débit de données augmenté sur la deuxième liaison de réseau local sans fil (206), en particulier un débit de données augmenté correspondant, pour augmenter la quantité de données communiquées via la deuxième liaison de réseau local sans fil (206).

3. Gestionnaire de données (100) selon l'une quelconque des revendications précédentes, dans lequel le processeur (101) est configuré pour déterminer une première quantité de données du flux de données communiquées via la première liaison de réseau local sans fil (205) et une deuxième quantité de données du flux de données communiquées via la deuxième liaison de réseau local sans fil (206), la première quantité de données étant inférieure à la deuxième quantité de données, de manière à déterminer la réduction de la quantité de données via la première liaison de réseau local sans fil (205) et l'augmentation d'une quantité de données via la deuxième liaison de réseau local sans fil (206).

4. Gestionnaire de données (100) selon l'une quelconque des revendications précédentes, dans lequel le processeur (101) est configuré pour déterminer la réduction des données communiquées via la première liaison de réseau local sans fil (205) et l'augmentation des données communiquées via la deuxième liaison de réseau local sans fil (206) si une comparaison de la qualité de liaison de la première liaison de réseau local sans fil (205) et de la qualité de la liaison de communication (204) indique une perturbation de la première liaison de réseau local sans fil.

5. Gestionnaire de données (100) selon la revendication 4, dans lequel le processeur (101) est configuré pour évaluer que la première liaison de réseau local sans fil (205) est perturbée si la qualité de liaison de la liaison de communication (204) est supérieure à la qualité de la première liaison de réseau local sans fil (205), et dans lequel le processeur (101) est configuré pour évaluer que la deuxième liaison de réseau local sans fil (206) est perturbée si la qualité de liaison de la liaison de communication (204) est supérieure à la qualité de la deuxième liaison de réseau local sans fil (206).

6. Gestionnaire de données (100) selon l'une quelconque des revendications précédentes, dans lequel la qualité de liaison respective est déterminée par un indicateur de qualité de liaison qui indique au moins l'un des paramètres de qualité de liaison suivants : le taux d'erreur de bits, le taux d'erreur de paquets, le délai de communication, le rapport signal sur bruit, et la bande passante de communication.

7. Gestionnaire de données (100) selon l'une quelconque des revendications précédentes, dans lequel le processeur (101) est configuré pour déterminer la réduction de la quantité de données et l'augmentation de la quantité de données sur base d'un tableau de correspondance, le tableau de correspondance attribuant une réduction des quantités de données et une augmentation des quantités de données à des qualités de liaison.

8. Gestionnaire de données (100) selon l'une quelconque des revendications précédentes, dans lequel le processeur (101) est configuré pour sortir un signal de contrôle de données indiquant la réduction de la quantité de données et l'augmentation de la quantité de données, dans lequel l'interface réseau (102) est configurée pour transmettre le premier signal de contrôle de données à la passerelle d'accès (201).

9. Gestionnaire de données (100) selon l'une quelconque des revendications précédentes, dans lequel l'interface réseau (102) est connectée en communication avec la passerelle d'accès (201) pour recevoir les signaux d'état.

10. Système de communication, comprenant :
une première entité d'accès au réseau (203) destinée à procurer un accès au réseau via une liaison de communication (204) à une passerelle d'accès (201),
une passerelle d'accès (201) configurée pour se connecter au réseau de communication via la liaison de communication (204) ; et
un équipement utilisateur (202) configuré pour connecter la passerelle d'accès (201) via une première liaison de réseau local sans fil (205) et une deuxième liaison de réseau local sans fil (206),
la première liaison de réseau local sans fil (205) et la liaison de communication (204) formant une première liaison de communication composite (204), la deuxième liaison de réseau local sans fil (206) et la liaison de communication (204) formant une deuxième liaison de communication composite (204) ;
l'équipement utilisateur (202) étant configuré pour communiquer simultanément sur la première liaison de réseau local sans fil (205) et la deuxième liaison de réseau local sans fil (206) ; et
un gestionnaire de données (100) comprenant :
une interface réseau (102) configurée pour recevoir
un premier signal d'état qui indique une qualité de liaison de la première liaison de communication composite (204),
un deuxième signal d'état qui indique une qualité de liaison de la deuxième liaison de communication composite (204), et
un troisième signal d'état qui indique une qualité de liaison de la liaison de communication (204) ; et
un processeur (101) configuré
pour déterminer une réduction de la quantité de données du flux de données communiquées via la première liaison de réseau local sans fil (205), et
pour déterminer une augmentation de la quantité de données du flux de données communiquées via la deuxième liaison de réseau local sans fil (206), si le troisième signal d'état indique une qualité de liaison supérieure à la qualité de liaison indiquée par le premier signal d'état.

11. Système de communication selon la revendication 10, dans lequel le processeur (101) du gestionnaire de données (100) est configuré pour sortir un signal de contrôle de données indiquant la réduction de la quantité de données et l'augmentation de la quantité de données, dans lequel l'interface réseau (102) est configurée pour transmettre le premier signal de contrôle de données à la passerelle d'accès (201).

12. Système de communication selon la revendication 11, dans lequel la passerelle d'accès (201) est configurée pour adapter la première liaison de réseau local sans fil (205) et la deuxième liaison de réseau local sans fil (206) sur base du signal de contrôle, ou dans lequel la passerelle d'accès (201) est configurée pour être contrôlée par le signal de contrôle pour adapter la première liaison de réseau local sans fil (205) et la deuxième liaison de réseau local sans fil (206).

13. Système de communication selon l'une des revendications 10 à 12, dans lequel le gestionnaire de données (100) est attribué dans une entité fonctionnelle du réseau de communication, ou dans lequel le gestionnaire de données (100) est attribué dans le réseau de communication en utilisant une division fonctionnelle de la fonctionnalité du gestionnaire de données (100), ou dans lequel le gestionnaire de données (100) est attribué dans la passerelle d'accès (201).

14. Système de communication selon la revendication 13, dans lequel la division fonctionnelle du gestionnaire de données (100) distribue le gestionnaire de données (100) au moins partiellement vers un bord du système de communication.

15. Procédé de distribution des données d'un flux de données d'un équipement utilisateur (202) via une première liaison de réseau local sans fil (205) et une deuxième liaison de réseau local sans fil (206), l'équipement utilisateur (202) étant configuré pour communiquer simultanément via la première liaison de réseau local sans fil (205) et la deuxième liaison de réseau local sans fil (206),
la première liaison de réseau local sans fil (205) et la deuxième liaison de réseau local sans fil (206) connectant chacune l'équipement utilisateur (202) à une passerelle d'accès (201), dans lequel la passerelle d'accès (201) est configurée pour se connecter à une entité d'accès au réseau (203) via une liaison de communication (204), l'entité d'accès au réseau (203) procurant un accès à un réseau de communication pour la passerelle d'accès (201),
la première liaison de réseau local sans fil (205) et la liaison de communication (204) formant une première liaison de communication composite (204), et la deuxième liaison de réseau local sans fil (206) et la liaison de communication (204) formant une deuxième liaison de communication composite (204), le procédé comprenant :
la réception d'un premier signal d'état qui indique une qualité de liaison de la première liaison de communication composite (204),
la réception d'un deuxième signal d'état qui indique une qualité de liaison de la deuxième liaison de communication composite (204) ;
la réception d'un troisième signal d'état qui indique une qualité de liaison de la liaison de communication (204) ;
la détermination d'une réduction de la quantité de données du flux de données communiquées via la première liaison de réseau local sans fil (205) et d'une augmentation de la quantité de données du flux de données communiquées via la deuxième liaison de réseau local sans fil (206), si le troisième signal d'état indique une qualité de liaison supérieure à la qualité de liaison indiquée par le premier signal d'état.
